# EUROPEAN PATENT SPECIFICATION

(11) **EP 1 874 631 B1**
(45) Date of publication and mention of the grant of the patent: **04.08.2010**
(21) Application number: 05817057.2
(22) Date of filing: 08.12.2005
(51) Int. Cl.: B65B 25/04, B65G 47/24

(54) **DEVICE AND METHOD FOR ORIENTING OBJECTS**
VORRICHTUNG UND VERFAHREN ZUR AUSRICHTUNG VON OBJEKTEN
DISPOSITIF ET PROCEDE POUR ORIENTER DES OBJETS

(30) Priority: 08.12.2004 NL 1027684
(43) Date of publication of application: 09.01.2008
(73) Proprietor: Fwd Exploitatie B.V., NL-7051 HT Varsseveld (NL)
(72) Inventor: FLAMMA, René, 46446 Emmerich (DE); WENTINK, Raymond, NL-7002 HD Doetinchem (NL)
(74) Representative: Hoeben, Ferdinand Egon
(86) International application number: PCT/NL2005/000847
(87) International publication number: WO 2006/062401

(56) References cited:
- EP-A- 0 727 355
- GB-A- 1 303 764
- US-A- 5 410 955
- US-A- 5 632 205
- US-B1- 6 691 854
- PATENT ABSTRACTS OF JAPAN vol. 014, no. 535 (C-0781), 26 November 1990 (1990-11-26) & JP 02 222759 A (HITACHI PLANT ENG & CONSTR CO LTD), 5 September 1990 (1990-09-05)

## Description

The present invention relates to a device for orienting substantially spherical objects, such as onions, apples, peppers or cabbage.

Spherical products such as onions, apples peppers and cabbage are often processed mechanically. Such treatments include peeling or hollowing out. For this purpose such products have to be introduced with a predetermined orientation into the peeling machine. This introduction into a machine has to be carried out precisely by hand, this being a task requiring great concentration of the person carrying out this work. Such great concentration is required because it is necessary to work regularly and quickly. It has be8en found that this placing work slows the peeling process and that inaccuracy results in much waste. A device according to the preamble of claim 1 is known from EP-A-727355.

In order to obviate these drawbacks the present invention provides a device as defined in claim 1.

Such a device is able to orient the objects precisely and quickly in an orientation suitable for the desired treatments. Losses due to erroneous insertion of objects is hereby prevented.

A first preferred embodiment relates to a device wherein the orientation determining system comprises at least one camera for making recordings of the object. Information is hereby obtained in advantageous manner for the purpose of determining the orientation of the object.

The orientation determining system preferably comprises a processing unit and a memory for processing recording information from the camera. Calculations can be performed by means of the processing unit on the basis of software for the purpose of determining the orientation and an appropriate rotation of the rotation members.

In a further preferred embodiment the device comprises an adjusting mechanism for adjusting the mutual distance between the rotation members. A plurality of different objects can hereby be oriented with one device.

In a practical embodiment the rotation wheels comprise a rotation surface with a predetermined coefficient of friction. This coefficient can be suitably chosen in accordance with the surface of the object. It is possible to provide an exchangeable surface or exchangeable wheels.

A further embodiment comprises a transfer device for transferring the object to a treatment device. The obtained orientation is herein retained during transfer. It is further possible during orienting of the objects to take into account a known change in orientation caused by the transfer device.

It is further possible to provide a treatment device for treating the object in a desired orientation. This can be a per se known peeling device for onions.

The transfer device preferably comprises spring means for placing the object under bias in a treatment device. It hereby becomes possible for a spring unit to be arranged in a gripper of the transfer device, with which spring unit the object is placed under bias in an opening of the peeling machine. This prevents, among other things, an undesired rotation taking place after the placing.

The central axes of the rotation wheels are ordered in one plane. A relatively simple calculation method for the rotations to be performed hereby becomes possible.

In a further embodiment, the objects are lit by means of diffuse light. An advantage thereof is that intense reflections of the light on the surface of the object are prevented. Intense reflections can cause peak values in the orientation determining system, which peak values can lead to a wrong orientation of the object.

In e.g. an optical system with a camera, intense reflections on a substantially spherical surface can cause oversaturation of parts of a recording of undersaturation om large parts of the object around the intense reflection. In an alternative manner, intense reflections can be interpreted by the system as the protrusion of the object based on which te orientation is to be performed. The diffuse lighting serves to prevent these issues.

Preferably, the diffuse light is obtained by means of indirectly lighting the object. Alternatively, it is possible to achieve indirect lighting by means of a diffuser such as e.g. opal glass (milk glass) or another filter.

A further aspect of the present invention relates to a method for orienting a substantially spherical object with an external characteristic suitable for orientation, such as a bulbous plant, pepper, apple or cabbage, using the device described above and comprising steps for:
- placing the object on at least three drivable rotation wheels,
- determining the orientation of the object,
- determining the desired change in the orientation,
- rotating the rotation members on the basis of the desired change in the orientation.

In a preferred embodiment the step for determining the orientation of the object comprises steps for:
- making a recording by means of at least one camera,
- determining the position of external characteristics of the object on the basis of the recording,
- determining the orientation of the object on the basis of the relative position of the external characteristics of the object.

The method preferably further comprises steps for controlling the rotation of the rotation wheels so that the displacement vector has an upward directed resultant. Such methods provide advantages similar to those described in the foregoing with reference to the device.

Further advantages, features and details of the present invention will be elucidated on the basis of an embodiment wherein reference is made to the accompanying figures, in which:
- Fig. 1/6 shows a schematic side view of a first embodiment according to the present invention;
- Fig. 2/6 is a top view of the embodiment of fig. 1/6;

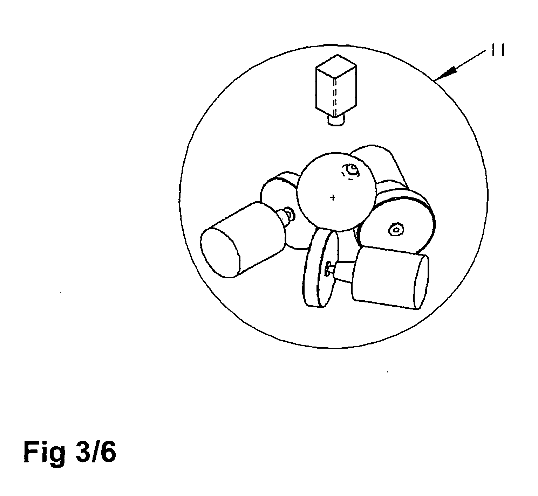

- Fig. 3/6 shows an isometric projection of the embodiment;
- Fig. 4/6 shows a block diagram of a part of the embodiment;
- Fig. 5/6 shows a flow diagram of an embodiment of a method according to the present invention;
- Fig. 6/6 is a side view of a further embodiment according to the present invention.

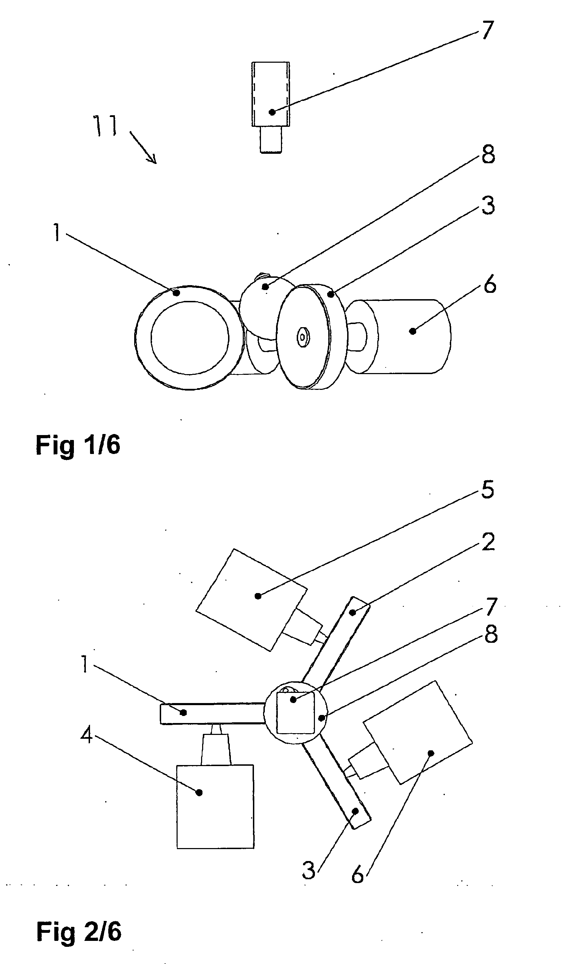

A first embodiment (fig. 1) according to the present invention relates to an orienting device 11 comprising three wheels 1, 2 and 3, of which the rotation axes lying in one plane are arranged in triangular position, and which are driven by drives 4, 5 and 6. A camera system 7, comprising a processing unit and a memory, determines the orientation of product 8 on the basis of geometric characteristics. This orientation is then translated by the processing system, not shown in the figure, into a combined drive pattern for the purpose of drives 4, 5 and 6 of wheels 1, 2 and 3.

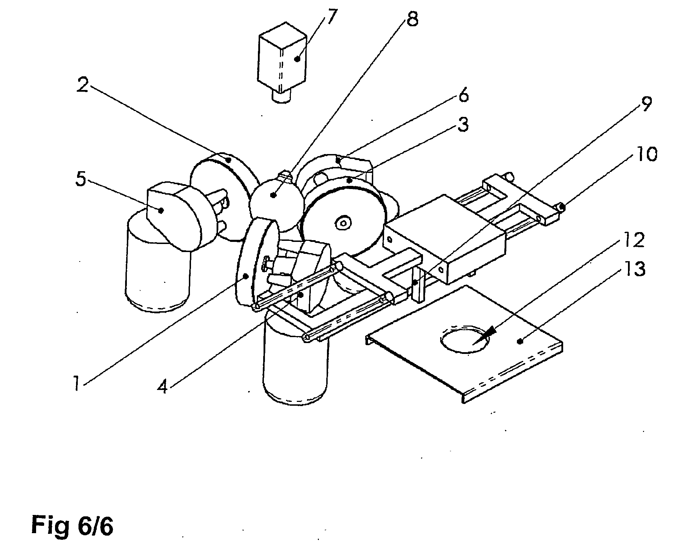

Fig. 2/6 shows wheels 1, 2 and 3, of which the rotation axes lying in one plane have a triangular relation. The wheels are always driven in combination, so that the resultant displacement vector is directed upward. Due to combined actuation of wheels 1, 2 and 3 the product is forced into a determined direction of rotation.

Using adjusting means (not shown) the distance of the rotation axes can be adjusted so that products of a different size, such as onions, can be oriented.

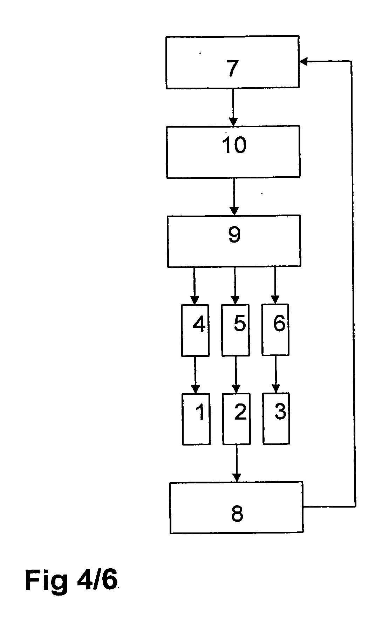

Fig. 4/6 shows a block diagram of the orienting system. Camera 7 makes a recording of the product, in particular the onion, and transmits the image information to the processing unit. This processing unit 10 digitizes the image information. From this image information of the product the top or bottom (top or tail of the onion) is then determined, one of which will be on view. Stated generally, the axis through the product is defined whereby the orientation of the product can be determined. From this orientation axis of the onion and the desired orientation the desired rotation of the product is calculated for the purpose of causing the product to assume the desired orientation.

This necessary rotation of the product is then translated into a pattern of rotation of the wheels so as to be able to bring about the desired rotation of the product. The drive of the wheels is then controlled in accordance with this pattern. The drives 4, 5 and 6 rotate wheels 1, 2 and 3 which cause the product to rotate to the desired position. The position of the onion is then recorded again by the camera for monitoring purposes or for the purpose of further correction of the orientation of the onion.

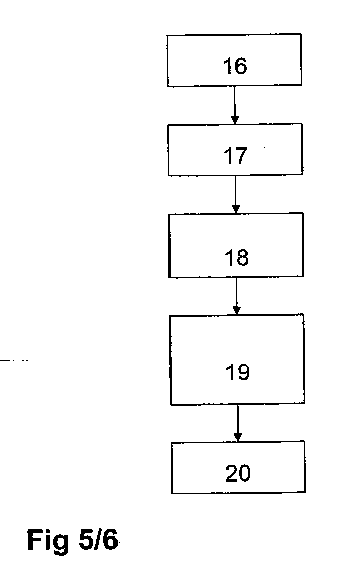

Fig. 5/6 shows schematically a preferred embodiment of a method for orienting the objects. In step 16 one or more recordings are made of an onion and, depending on the embodiment, these images are digitized by means of an A/D converter. In step 17 the orientation of the onion is determined by means of orientation determining means. A rotation profile is then defined in step 18, on the basis of which the rotation of the wheels is subsequently performed. This profile comprises data relating to the rotation of each of the wheels during orientation of the onion.

In step 19 the desired rotation of the onion is converted on the basis of the profiles into motor actuation instructions by means of suitable instruction compiling means. In step 20 the motors are then actuated by means of for instance a servo on the basis of the motor actuation instructions.

For placing of the onion in an onion peeling machine, gripper 9 of transfer arm 10 takes the onion out of the orienting device 11 and the transfer arm displaces the onion to hole 12 in machine 13. The onion is then placed under spring pressure in the hole by the gripper so that the onion does not change orientation during placing.

The present invention is not limited to the description above. In the light of the description, different aspects of the described embodiments can be combined by the skilled person. The rights sought are defined by the appended claims.

## Claims

1. Device (11) for orienting a substantially spherical object (8) having an external characteristic suitable for orientation, such as a bulbous plant, pepper, apple or cabbage, comprising:
- a frame,
- at least three drivable rotation wheels (1,2,3) arranged in the frame for supporting the object (8), the axes of the wheels (1,2,3) being arranged in substantially a common plane,
- drive means (4,5,6) for driving the rotation wheels (1,2,3), and
- an orientation determining system (7) for determining the orientation of the spherical object (8), **characterized in that**
- the drive means (4,5,6) drive the rotation wheels (1,2,3) individually,
- the orientation determining system (7) determines a rotation profile on the basis of which the drive means (4,5,6) are actuated.

2. Device as claimed in claim 1, wherein the orientation determining system (7) comprises at least one camera (7) for making recordings of the object.

3. Device as claimed in claim 1 or 2, wherein the orientation determining system (7) comprises a processing unit and a memory for processing recording information from the camera.

4. Device as claimed in claim 1, 2 or 3, comprising an adjusting mechanism for adjusting the mutual distance between the rotation wheels.

5. Device as claimed in one or more of the foregoing claims, wherein the rotation wheels comprise a rotation surface with a predetermined coefficient of friction.

6. Device as claimed in one or more of the foregoing claims, comprising a transfer device (9, 10) for transferring the object to a treatment devices (13).

7. Device as claimed in one or more of the foregoing claims, comprising a treatment device (13) for treating the object in a desired orientation.

8. Device as claimed in claim 6, wherein the treatment device is a peeling or drilling device.

9. Device as claimed in one or more of the foregoing claims 6-8, wherein the transfer device comprises spring means for placing the object under bias in a treatment device.

10. Device according to one or more of the preceding claims, in which the objects are lit by means of diffuse and/or indirect lighting.

11. Device according to one or more of the preceding claims comprising dispersing means, such as a diffuser or e.g. milk glass, for dispersing light for lighting the object.

12. Method for orienting a substantially spherical object with an external characteristic suitable for orientation, such as a bulbous plant, pepper, apple or cabbage, by means of a device according to one or more of claim 1-11, comprising steps for:
- placing the object (8) on at least three drivable rotation wheels (1,2,3),
- determining the orientation of the object (8),
- determining the desired change in the orientation,
- rotating the rotation wheels (1,2,3) on the basis of the desired change in the orientation.

13. Method as claimed in claim 12, wherein the step for determining the orientation of the object (8) comprises steps for:
- making a recording by means of at least one camera (7),
- determining the position of external characteristics of the object (8) on the basis of the recording,
- determining the orientation of the object (8) on the basis of the relative position of the external characteristics of the object.

14. Method as claimed in claim 12 or 13, comprising steps for controlling the rotation of the rotation wheels (1,2,3) so that the displacement vector has an upward directed resultant.

## Patentansprüche

1. Vorrichtung (11) für die Ausrichtung einer im wesentlichen kugelförmige Objekt (8) mit einem externen charakteristischen geeignet für Orientierung, wie ein Zwiebelgewächs, Paprika, Apfel-oder Weißkohl, bestehend aus:
- Einen Rahmen,
- Mindestens drei rotierbar antriebbare Räder (1,2,3) in den Rahmen für die Unterstützung des Objekts (8) angeordnet, die Achsen der Räder in substanziell einer gemeinsamen Ebene angeordnet,
- Antriebsmittel (4,5,6) für der Antrieb die Rotation individuelle Räder und
- Eine Orientierungbestimmungsystem zur Bestimmung der Orientierung der sphärischen Objekt für die Bestimmung eines Wechsel-Profil auf der Grundlage der das Laufwerk mittels betätigt werden, **dadurch gekennzeichnet, dass**
- die Antriebmittel die rotierbare Räder einzeln antreiben,
- die Orientierung der Bestimmung System ermittelt ein Rotationprofil auf der Grundlage der Antriebsmittel betätigt werden.

2. Vorrichtung wie in Anspruch 1, wobei das Orientierungbestimmungsystem mindestens eine Kamera (7) für Aufnahmen des Objekts umfasst.

3. Vorrichtung nach Anspruch 1 oder 2, wobei das Orientierungbestimmungsystem einer Recheneinheit und einem Speicher für die Verarbeitung von Informationen aus der Kamera umfasst.

4. Vorrichtung nach Anspruch 1, 2 oder 3, umfassend einem Verstellmechanismus zum Verstellen des gegenseitigen Abstandes zwischen der Rotationräder.

5. Vorrichtung als in einem oder mehreren der vorstehenden Ansprüche, wobei die Rotationräder bestehen aus einer Rotationoberfläche mit einem vorgegebenen Reibwert.

6. Vorrichtung als in einem oder mehreren der vorstehenden Ansprüche, umfassend eine Vorrichtung zur Übertragung für Übertragung der Objekt, ein Behandlunggerät.

7. Vorrichtung als in einem oder mehreren der vorstehenden Ansprüche, umfassend einem Behandlunggerät für Behandlung des Objektes in eine gewünschte Orientierung.

8. Vorrichtung wie in Anspruch 6 **dadurch gekennzeichnet, dass** das Behandlunggerät ein Peeling oder Bohranlagen ist.

9. Vorrichtung als in einem oder mehreren der vorhergehenden Ansprüche 6-8, **dadurch gekennzeichnet dass**, die Übertragungvorrichtung Federmittel umfasst für die Platzierung des Objekts unter Vorspannung in eine Behandlungseinrichtung.

10. Vorrichtung nach einem oder mehreren der vorhergehenden Ansprüche, in denen die Objekte beleuchted sind durch diffuse und/oder indirekte Beleuchtung.

11. Vorrichtung nach einem oder mehreren der Ansprüche aus dispergierende Mittel, wie zB einen Diffusor oder Milchglas, zum Dispergieren des Lichtes für die Beleuchtung des Objekts.

12. Verfahren zur Ausrichtung einer im wesentlichen kugelförmigen-cal-Objekt mit einem externen charakteristisch für Orientierung, wie ein Zwiebelgewächs, Paprika, Apfel oder Kohl, mittels einer Vorrichtung nach einem oder mehreren der vorhergehenden Ansprüche, umfassend die Schritte für:
- Platzieren des Objektes auf mindestens drei Rotierbar antreibbaren Räder,
- Bestimmung der Orientierung des Objekts,
- Bestimmung der gewünschten Veränderung in der Orientierung,
- Drehen der Rotationräder auf der Grundlage der gewünschten Veränderung in der Orientierung.

13. Verfahren nach Anspruch 12, wobei der Schritt zur Bestimmung der Orientierung des Objekts Schritte umfasst für:
- Machen eine Aufnahme durch mindestens eine Kamera,
- Bestimmung der Position der äußeren Merkmale des Objekts auf der Grundlage der Aufnahme,
- Bestimmung der Orientierung des Objekts auf der Grundlage der relativen Position der äußeren Merkmale des Objekts.

14. Verfahren nach Anspruch 12 oder 13, umfassend die Schritte zur Steuerung der Drehung der Räder Rotation, so dass der Verschiebungsvektor hat eine nach oben gerichtete resultierende.

## Revendications

1. Dispositif (11) pour l'orientation d'un objet sensiblement sphérique (8) qui convient avec une caractéristique de l'orientation externe, comme une instance de l'oignon, le poivron, la pomme ou le chou, composé de:
- un cadre
- au moins trois roues en rotation en état de rouler (1,2,3) dans le cadre de l'appui de l'objet (8) disposés entre les essieux des roues disposées en substantiellement un plan commun,,
- des moyens d'entraînement (4,5,6) pour la rotation des roues motrices et individuels
- un système de détermination d'orientation pour déterminer l'orientation de l'objet sphérique pour déterminer un profil de rotation sur la base des moyens d'entraînement sont actionnés, **caractérisé en ce que**
- les moyens d'entraînement des roues motrices peut tourner individuellement,
- détermination de l'orientation de la destination du système médiation d'un profil de rotation peut être utilisé sur la base des moyens d'entraînement.

2. Dispositif selon la revendication 1, dans lequel le système de détermination d'orientation comprend au moins une caméra (7) pour faire des enregistrements de l'objet.

3. La méthode de la revendication 1 ou 2, dans lequel le système de détermination d'orientation d'une unité de calcul et une mémoire pour le traitement de l'information se compose de la caméra.

4. La méthode de la revendication 1, 2 ou 3, com- envoyer un mécanisme de réglage pour le réglage de la distance par rotation mutuelle entre les roues.

5. Dispositif selon l'une ou plusieurs des revendications précédentes, dans lequel les roues de rotation constitué d'une surface de rotation avec un coefficient de frottement prédéterminée.

6. Dispositif selon l'une ou plusieurs des revendications précédentes, comprenant un dispositif de transmission pour la transmission de l'objet, un dispositif de traitement.

7. Dispositif selon l'une ou plusieurs des revendications précédentes, comprenant un dispositif de traitement pour le traitement de l'objet dans une orientation souhaitée.

8. Dispositif selon la revendication 6 est **caractérisée par** de fortes, que le dispositif de traitement est appareil de peeling ou un appareil de forage.

9. Dispositif selon l'une ou plusieurs des revendications 6-8, **caractérisé en ce que** le dispositif de transfert comprend des moyens de mise printemps l'objet en vertu de partialité dans un dispositif de traitement.

10. Dispositif selon l'une ou plusieurs des revendications précédentes, dans lequel les objets sont éclairés par la lumière diffuse et / ou un éclairage indirect.

11. Dispositif selon l'une ou plusieurs des revendications des agents dispersants, comme un diffuseur ou verre de lait, pour la dispersion de la lumière pour l'éclairage de l'objet.

12. Méthode pour l'orientation d'un objet sensiblement sphérique (8) qui convient avec une caractéristique de l'orientation externe, comme une instance de l'oignon, le poivron, la pomme ou le chou au moyen d'un dispositif selon l'une ou plusieurs des revendications précédentes, comprenant les étapes suivantes:
- Placer l'objet sur au moins trois rotatif roues motrices,
- Détermination de l'orientation de l'objet
- Détermination de l'évolution souhaitée en orientation,
- Tournez la molette sur la base des changements souhaités dans l'orientation.

13. La méthode selon la revendication 12, dans lequel l'étape de détermination de l'orientation de l'objet comprend des mesures pour:
- Prenez une photo en utilisant au moins une caméra,
- Déterminer la position des caractéristiques physiques de l'objet sur la base d'un enregistrement,
- Détermination de l'orientation de l'objet sur la base de la position relative des caractéristiques physiques de l'objet.

14. La méthode de la revendication 12 ou 13, comprenant les étapes de contrôle de la rotation de la rotation de la roue, de rotation de sorte que le vecteur de déplacement vers le haut a une résultante dirigée
